Europäisches Patentamt

**European Patent Office**

**Office européen des brevets**

(19)

(11) Veröffentlichungsnummer : **0 137 941**
**B1**

(12) **EUROPÄISCHE PATENTSCHRIFT**

(45) Veröffentlichungstag der Patentschrift :
06.05.87

(51) Int. Cl.⁴ : **B 60 K 20/00**

(21) Anmeldenummer : 84109226.1

(22) Anmeldetag : 03.08.84

(54) **Gangschalthebel für Kraftfahrzeuge.**

(30) Priorität : 08.08.83 DE 8322840 U

(43) Veröffentlichungstag der Anmeldung :
24.04.85 Patentblatt 85/17

(45) Bekanntmachung des Hinweises auf die Patenterteilung : 06.05.87 Patentblatt 87/19

(84) Benannte Vertragsstaaten :
FR GB IT NL SE

(56) Entgegenhaltungen :
DE-B- 1 630 407
DE-B- 2 004 249
US-A- 3 597 992

(73) Patentinhaber : FHS STAHLVERFORMUNG GMBH
Arnsberger Strasse 10-12 Postfach 413
D-5860 Iserlohn (DE)

(72) Erfinder : Dobrowolski, Josef
Grüner Talstrasse 182
D-5860 Iserlohn (DE)

(74) Vertreter : Oedekoven, Wolf-Dieter, Dipl. Ing.
Widenmayerstrasse 5
D-8000 München 22 (DE)

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung bezieht sich auf einen Gangschalthebel für Kraftfahrzeuge der im Oberbegriff des Patentanspruchs 1 angegebenen Gattung.

Derartige Gangschalthebel kommen seit längerer Zeit insbesondere bei Personenkraftfahrzeugen zur Anwendung und sind deswegen mit einer Rückwärtsgangsperre versehen, um ein unbeabsichtigtes Einlegen des Rückwärtsganges zu verhindern. Das dazu vorgesehene Sperrglied wirkt mit einem stationären Anschlag, beispielsweise an dem Schaltgehäuse, in welchem der Gangschalthebel schwenkbar gelagert ist, derart zusammen, daß der Gangschalthebel erst dann in die zum Einlegen des Rückwärtsganges erforderliche Stellung geschwenkt werden kann, wenn zuvor das Sperrglied vom Anschlag weg bewegt worden ist, wozu das hülsenförmige, mit einem äußeren Greifwulst versehene Betätigungsorgan auf dem hohlen Schalthebelschaft zum Handgriff hin gezogen werden muß, welcher auf dem freien Ende des Schalthebelschaftes befestigt ist.

Das im hohlen Schalthebelschaft verlaufende, flexible Zugglied ist von einem Drahtseil gebildet, dessen dem Sperrglied benachbartes Ende an einem im Schalthebelschaft axial verschiebbaren Stahlzapfen befestigt ist. Letzterer weist eine Querbohrung zur Aufnahme eines Querbolzens auf, der durch zwei miteinander fluchtende Langlöcher hindurch auf einander gegenüberliegenden Seiten aus dem Schalthebelschaft ragt und den Stahlzapfen mit dem hülsenförmig ausgebildeten, auf dem Schalthebelschaft axial verschiebbaren Sperrglied verbindet oder aber selbst das Sperrglied darstellt. Das andere Ende des Drahtseils ist über ein Klemmstück mit dem Betätigungsorgan verbunden, und zwar ist dieses Drahtseilende in einer Längsbohrung des Klemmstücks aufgenommen und darin mittels einer radialen Madenschraube verklemmt. Das klemmstück ist im hohlen Schalthebelschaft angeordnet und stützt sich auf einem inneren Vorsprung des Betätigungsorgans ab, welcher durch einen Längsschlitz des Schalthebelschaftes in dessen Inneres ragt und das Klemmstück untergreift.

Im hohlen Schalthebelschaft sind zwei Schraubendruckfedern angeordnet, und zwar zwischen dem Stahlzapfen und einer inneren Ringschulter des Schalthebelschaftes zur Belastung des Sperrgliedes in die Rückwärtsgangsperrstellung bzw. zwischen dem Klemmstück und dem Handgriff am freien Ende des Schalthebelschaftes zur Belastung des Betätigungsorgans vom Handgriff weg.

Der Erfindung liegt die Aufgabe zugrunde, bei Gangschalthebeln für Kraftfahrzeuge der im Oberbegriff des Patentanspruchs 1 angegebenen Gattung die Verbindung zwischen dem Sperrglied und dem Betätigungsorgan hinsichtlich Aufbau und Montage zu vereinfachen sowie zu verbilligen und sie sicherer sowie zuverlässiger zu gestalten.

Diese Aufgabe ist durch die im kennzeichnenden Teil des Patentanspruchs 1 angegebenen Merkmale gelöst. Vorteilhafte Ausgestaltungen des erfindungsgemäßen Gangschalthebels sind in den restlichen Patentansprüchen gekennzeichnet.

Statt eines Drahtseils, eines Klemmstücks mit Madenschraube und eines Stahlzapfens ist beim erfindungsgemäßen Gangschalthebel nur ein einziges Bauteil vorgesehen, nämlich ein flexibles, bandartiges Formteil aus Kunststoff, dessen eines Ende zapfenförmig und dessen anderes Ende ösenartig mit einer Öffnung ausgebildet ist, so daß das letztgenannte Ende auf den entsprechend ausgestalteten inneren Vorsprung des Betätigungsorgans aufgehängt oder aufgesteckt werden kann, und zwar vorzugsweise unter gegenseitiger Verrastung oder einem anderen Ineinandergreifen zur formschlüssigen Halterung des ösenartigen Endes des Zuggliedes auf dem inneren Vorsprung des Betätigungsorgans. Der am anderen Ende des flexiblen, bandartigen Formteils aus Kunststoff angeformte und somit einstückig mit demselben ausgebildete Zapfen weist die erwähnte Querbohrung zur Aufnahme des Querbolzens des Sperrgliedes bzw. des das Sperrglied bildenden Querbolzens auf. Auf diese Weise werden insbesondere die aus der genannten Aufgabenstellung hervorgehenden Vorteile erzielt.

Nachstehend sind zwei Ausführungsformen des erfindungsgemäßen Gangschalthebels für Kraftfahrzeuge anhand von Zeichnungen beispielsweise beschrieben. Darin zeigt:

Figur 1 eine erste Ausführungsform, teilweise längsgeschnitten;

Figur 2 eine zweite Ausführungsform, ebenfalls teilweise längsgeschnitten;

Figur 3 das Zugglied der Ausführungsform gemäß Figur 1 bzw. 2 in größerem Maßstab;

Figur 4 die Ansicht in Richtung des Pfeiles IV · des Zuggliedes nach Figur 3; und

Figur 5 die Ansicht in Richtung des Pfeiles V des inneren Vorsprungs des Betätigungsorgans der Ausführungsform gemäß Figur 1 bzw. 2, und zwar in noch größerem Maßstab.

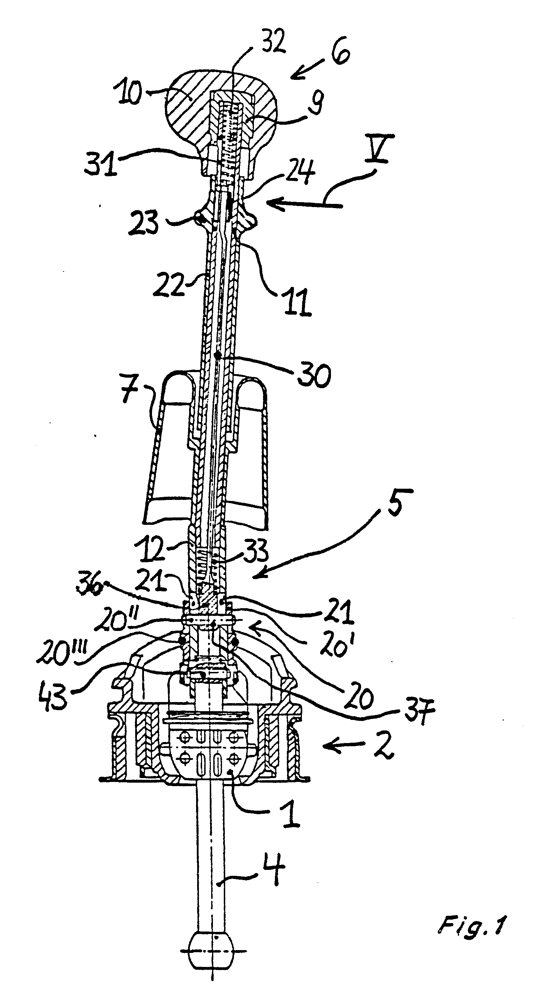

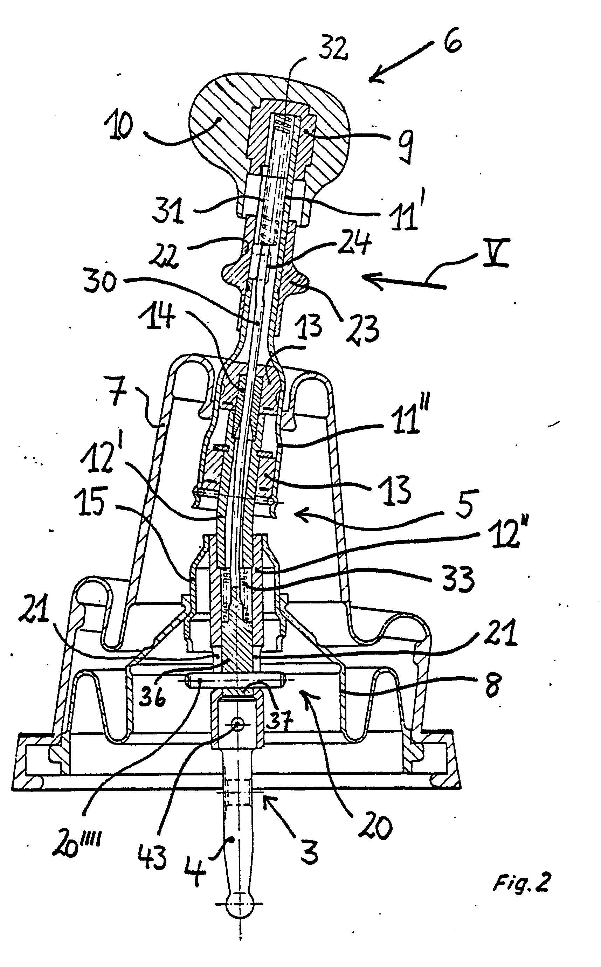

Der Gangschalthebel gemäß Figur 1 ist mittels einer kunststoffumspritzten Kugel 1 in einem Schaltgehäuse 2 schwenkbar gelagert. Auch der Gangschalthebel nach Figur 2 ist an der Stelle 3 senkrecht zur Zeichnungsebene schwenkbar gelagert und zusätzlich dazu parallel zur Zeichnungsebene verschwenkbar. Beide Gangschalthebel weisen jeweils einen unteren Schaltfinger 4 mit kugelförmigem freien Ende zur Betätigung eines Kraftfahrzeug-Zahnräderwechselgetriebes, einen hohlen Schalthebelschaft 5 und einen oberen Handgriff 6 zum Gangschalthebel-Verschwenken und Schalten des Zahnräderwechselgetriebes auf. Der Schalthebelschaft 5 durchsetzt einen flexiblen Schutzbalg 7, ferner beim Gangschalthebel nach Figur 2 einen flexiblen Dämpfungsbalg 8.

Der Handgriff 6 ist jeweils mit einem topfförmigen Kunststoffteil 9 versehen, welches in Polyurethanintegralschaum 10 eingebettet und auf das obere Ende des Schalthebelschaftes 5 aufgepreßt ist. Letzterer besteht aus mehreren miteinander verbundenen Stahlrohrstücken, und zwar beim Gangschalthebel gemäß Figur 1 aus einem oberen Stahlrohrstück 11 und einem unteren Stahlrohrstück 12 und beim Gangschalthebel gemäß Figur 2 aus einem oberen Stahlrohrstück 11′, einem mittleren Stahlrohrstück 12′ und einem unteren Stahlrohrstück 12″. Die beiden Stahlrohrstücke 11 und 12 bzw. 12′ und 12″ sind mit den einander benachbarten Enden ineinandergesteckt und miteinander verlötet. Das obere Stahlrohrstück 11′ des Gangschalthebels nach Figur 2 umschließt den oberen Teil des mittleren Stahlrohrstücks 12′ mit einem erweiterten Abschnitt 11″ und ist in diesem Bereich mit dem mittleren Stahlrohrstück 12′ mittels zweier Dämpfungshülsen 13 verbunden, von denen die obere eine in das obere Ende des mittleren Stahlrohrstücks 12′ ragende Hülse 14 umschließt. Das untere Stahlrohrstück 12″ ist von einer verhältnismäßig weiten Hülse 15 umgeben, welche am oberen Ende des unteren Stahlrohrstücks 12″ befestigt ist und auf welcher der Dämpfungsbalg 8 mit dem Ende geringeren Öffnungsdurchmessers fixiert ist.

Die beiden Gangschalthebel gemäß Figur 1 und 2 sind jeweils mit einer Rückwärtsgangsperre versehen, welche ein unbeabsichtigtes Einlegen des Rückwärtsganges und entsprechendes Verschwenken des jeweiligen Gangschalthebels verhindert. Dazu ist ein Sperrglied 20 vorgesehen, welches mit einem nicht dargestellten, stationären Anschlag zusammenwirkt, der beim Gangschalthebel nach Figur 1 am Schaltgehäuse 2 ausgebildet ist. Bei diesem Gangschalthebel besteht das Sperrglied 20 aus einer auf dem Schalthebelschaft 5 bzw. dem unteren Stahlrohrstück 12 desselben axial verschiebbaren Hülse 20′ mit einem Querbolzen 20″ und einem äußeren Dämpfungsring 20‴, während beim Gangschalthebel nach Figur 2 das Sperrglied 20 von einem den Schalthebelschaft 5 bzw. dessen unteres Stahlrohrstück 12″ durchsetzenden, in Längsrichtung des Schalthebelschafts 5 bzw. des Stahlrohrstücks 12″ bewegbaren Querbolzen 20⁗ gebildet ist. Der Querbolzen 20″ bzw. 20⁗ durchsetzt zwei einander gegenüberliegende und miteinander fluchtende Langlöcher 21 des Schalthebelschafts 5 bzw. des unteren Stahlrohrstücks 12 bzw. 12″ desselben.

Zur Betätigung des Sperrgliedes 20 dient ein hülsenförmiges Betätigungsorgan 22 aus Kunststoff mit einem äußeren Greifwulst 23 und einem inneren Vorsprung 24, welches auf dem Schalthebelschaft 5 bzw. dessen oberem Stahlrohrstück 11 bzw. 11′ axial verschiebbar und mit dem Sperrglied 20 über ein flexibles Zugglied 30 verbunden ist, welches innerhalb des hohlen Schalthebelschaftes 5 verläuft. Das Zugglied 30 greift einerseits an dem durch einen Längsschlitz 31 des Schalthebelschaftes 5 bzw. des oberen Stahlrohrstücks 11 bzw. 11′ desselben hindurch in das Innere ragenden inneren Vorsprung 24 des Betätigungsorgans 22 und andererseits am Querbolzen 20″ bzw. 20⁗ an. Im hohlen Schalthebelschaft 5 sind ferner zwei Schraubendruckfedern 32 und 33 zwischen dem Handgriff 6 und dem Betätigungsorgan 22 zur Belastung des letzteren vom Handgriff 6 weg bzw. zwischen dem unteren Ende des oberen Stahlrohrstücks 11 bzw. des mittleren Stahlrohrstücks 12′ und dem benachbarten Ende des Zuggliedes 30 zur Belastung des Sperrgliedes 20 in die Rückwärtsgangsperrstellung gemäß Figur 1 bzw. 2 angeordnet. Um das Sperrglied 20 aus der Rückwärtsgangsperrstellung in Figur 1 bzw. 2 nach oben zu bewegen, werden der Handgriff 6 und der äußere Greifwulst 23 des Betätigungsorgans 22 mit einer Hand umfaßt und wird das Betätigungsorgan 22 entgegen der Wirkung der Schraubendruckfeder 32 auf den Handgriff 6 zu gezogen, so daß das Zugglied 30 das Sperrglied 20 entsprechend mitnimmt, also die Hülse 20′ bzw. den Querbolzen 20⁗ entsprechend auf dem bzw. in dem Schalthebelschaft 5 entgegen der Wirkung der Schraubendruckfeder 33 in Figur 1 bzw. 2 nach oben in eine Stellung zieht, in welcher die Hülse 20′ bzw. der Querbolzen 20⁗ beim Verschwenken des Gangschalthebels nach Figur 1 bzw. 2 nicht mehr am zugehörigen, stationären Anschlag zur Anlage kommen kann und somit mittels des Schaltfingers 4 im zugehörigen Zahnräderwechselgetriebe der Rückwärtsgang eingelegt werden kann.

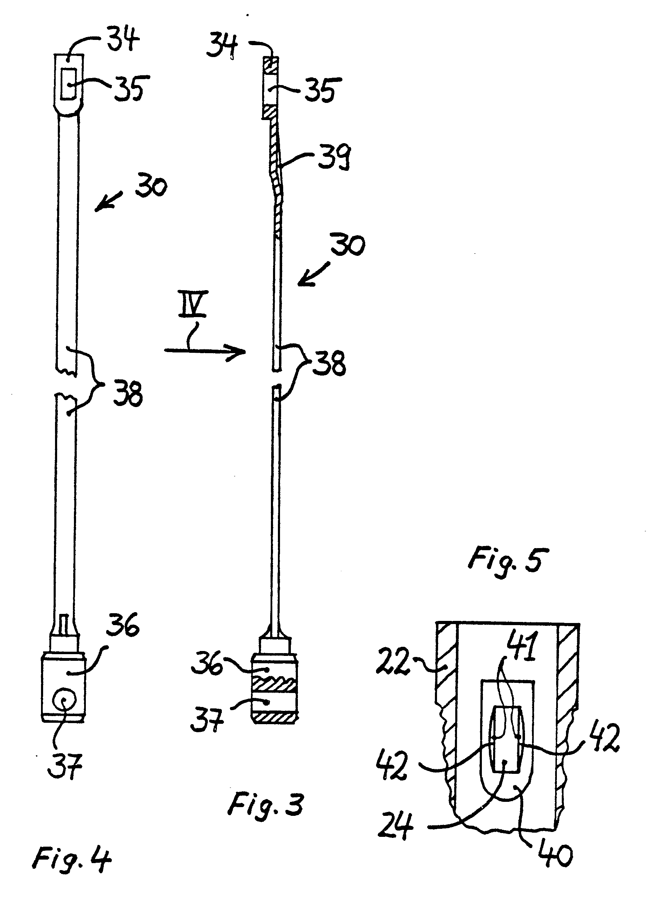

Das Zugglied 30 ist als flexibles, bandartiges Formteil aus Kunststoff ausgebildet. Die Ausgestaltung geht besonders deutlich aus Figur 3 und 4 hervor. Es weist ein geringfügig verbreitertes und verdicktes, ösenartiges Ende 34 mit einer rechteckigen Öffnung 35, ein als zylindrischer Zapfen 36 mit einer Querbohrung 37 ausgebildetes Ende und einen als flaches Band ausgebildeten Mittelabschnitt 38 zwischen dem ösenartigen Ende 34 und dem zapfenförmigen Ende 36 auf. Das ösenartigen Ende 34 ist gemäß Figur 3 gegenüber dem Mittelabschnitt 38 geringfügig seitlich versetzt, und zwar gemäß Figur 1 und 2 zu derjenigen Seite hin abgebogen, von welcher her der innere Vorsprung 24 des Betätigungsorgans 22 in die Öffnung 35 eingeführt wird. Auf der anderen Seite erstreckt sich am ösenartigen Ende 34 ein mittlerer Längssteg 39 zum Mittelabschnitt 38.

Die Querbohrung 37 des Zapfens 36 dient zur Aufnahme des Querbolzens 20″ gemäß Figur 1 bzw. des Querbolzens 20⁗ gemäß Figur 2. Auf dem Zapfen 36 stützt sich die Schraubendruckfeder 33 ab. Das ösenartige Ende 34 wird auf den inneren Vorsprung 24 des Betätigungsorgans 22 aufgesteckt, dessen Ausgestaltung besonders deutlich aus Figur 5 hervorgeht. Er weist einen rechteckigen Querschnitt entsprechend der rechteckigen Öffnung 35 des ösenartigen Endes 34 des Zuggliedes 30 auf und geht über einen breiteren sowie höheren und auf der unteren, dem Handgriff 6 abgewandten Seite entsprechend dem benachbarten Ende des Längsschlitzes 31 abgerundeten Fußabschnitt 40 in das Betätigungsorgan 22 über. Mit dem Fußabschnitt 40 läuft das Betätigungsorgan 22 im Längsschlitz 31 des Schalthebelschaftes 5 bzw. des oberen Stahlrohrstücks 11 bzw. 11' desselben. Zur formschlüssigen Halterung des ösenartigen Endes 34 des Zuggliedes 30 auf dem inneren Vorsprung 24 des Betätigungsorgans 22 ist letzterer an den beiden senkrechten Seitenflächen 41 jeweils mit einem Rastwulst 42 versehen, welcher sich entlang der Vorderkante der jeweiligen Seitenfläche 41 erstreckt und gemäß Figur 5 nach außen gewölbt sein kann. Beim Aufstekken des ösenartigen Endes 34 des Zuggliedes 30 auf den inneren Vorsprung 24 des Betätigungsorgans 22 findet also ein gegenseitiges Verrasten statt, so daß die beiden Rastwülste 42 das aufgesteckte ösenartige Ende 34 auf der Seite des mittleren Längssteges 39 hintergreifen.

Beim Gangschalthebel gemäß Figur 1 ist das Zugglied 30 länger ausgebildet als beim Gangschalthebel gemäß Figur 2, ebenso wie das Betätigungsorgan 22 für das Sperrglied 20 beim Gangschalthebel gemäß Figur 1 länger ausgebildet ist als beim Gangschalthebel nach Figur 2. Bei beiden Gangschalthebeln ist der Schaltfinger 4 jeweils in das untere Ende des hohlen Schalthebelschaftes 5 bzw. des unteren Stahlrohrstücks 12 bzw. 12'' desselben hineingesteckt und darin mittels eines Befestigungsbolzens 43 festgelegt.

Wenn auch beim Zugglied 30 gemäß Figur 3 und 4 der Mittelabschnitt 38 als flaches Band mit rechteckigem Querschnitt ausgebildet ist, so sind doch auch andere Ausgestaltungen des Mittelabschnitts 38 mit anderen Querschnittsformen möglich. Insbesondere kann das Zugglied 30 auch als flexibles, bandartiges Formteil aus Kunststoff mit einem Mittelabschnitt 38 ausgebildet werden, welcher einen kreisrunden oder kreuzförmigen Querschnitt aufweist.

**Patentansprüche**

1. Gangschalthebel für Kraftfahrzeuge mit einem Sperrglied (20) zur Verhinderung des Einlegens des Rückwärtsganges und einem Betätigungsorgan (22) für das Sperrglied (20), wobei

a) das Sperrglied (20) am Schalthebelschaft (5) beweglich angeordnet und in die Rückwärtsgangsperrstellung federbelastet ist,

b) das Betätigungsorgan (22) zur Bewegung des Sperrgliedes (20) aus der Rückwärtsgangsperrstellung auf dem Schalthebelschaft (5) verschiebbar und über ein im hohlen Schalthebelschaft (5) verlaufendes, flexibles Zugllied (30) mit dem Sperrglied (20) verbunden ist sowie mit einem inneren Vorsprung (24) durch einen Längsschlitz (31) des Schalthebelschaftes (5) in denselben ragt und

c) das Zugglied (30) an dem dem Sperrglied (20) benachbarten Ende einen im Schalthebelschaft (5) axial verschiebbaren Zapfen (36) mit einer Querbohrung (37) aufweist, durch welche sich ein Querbolzen (20'') des Sperrgliedes (20) bzw. ein das Sperrglied (20) bildender Querbolzen (20'''') erstreckt, dadurch gekennzeichnet, daß

d) das Zugglied (30) als bandartiges Formteil aus Kunststoff ausgebildet ist, an dessen einem Ende der Zapfen (36) angeformt ist und dessen anderes Ende (34) ösenartig mit einer Öffnung (35) ausgestaltet ist, und

e) der innere Vorsprung (24) des Betätigungsorgans (22) in die Öffnung (35) des ösenartigen Endes (34) des Zuggliedes (30) eingreift.

2. Gangschalthebel nach Anspruch 1, dadurch gekennzeichnet, daß das ösenartige Ende (34) des Zuggliedes (30) auf dem inneren Vorsprung (24) des Betätigungsorgans (22) formschlüssig gehalten ist.

3. Gangschalthebel nach Anspruch 2, dadurch gekennzeichnet, daß das ösenartige Ende (34) des Zuggliedes (30) und der innere Vorsprung (24) des Betätigungsorgans (22) miteinander verrastet sind.

4. Gangschalthebel nach Anspruch 1, 2 oder 3, dadurch gekennzeichnet, daß das ösenartige Ende (34) des Zuggliedes (30) eine rechteckige Öffnung (35) und der innere Vorsprung (24) des Betätigungsorgans (22) einen entsprechenden rechteckigen Querschnitt aufweist.

5. Gangschalthebel nach Anspruch 4 in Verbindung mit Anspruch 3, dadurch gekennzeichnet, daß der innere Vorsprung (24) des Betätigungsorgans (22) auf mindestens einer Seitenfläche (41) einen Rastwulst (42) zum Hintergreifen des ösenartigen Endes (34) des Zuggliedes (30) aufweist.

6. Gangschalthebel nach einem der vorstehenden Ansprüche, dadurch gekennzeichnet, daß das ösenartige Ende (34) des Zuggliedes (30) seitlich auf den inneren Vorsprung (24) des Betätigungsorgans (22) zu abgebogen ist.

7. Gangschalthebel nach einem der vorstehenden Ansprüche, dadurch gekennzeichnet, daß das bandartige Formteil aus Kunststoff zwischen dem ösenartigen Ende (34) und dem zapfenförmigen Ende (36) einen rechteckigen, insbesondere flach-rechteckigen, oder kreisrunden oder kreuzförmigen Querschnitt aufweist.

**Claims**

1. Gear shift lever for automotive vehicles having a blocking member (20) for preventing the reverse speed to be engaged and an element (22) for actuating the blocking member (20), wherein

a) the blocking member (20) is disposed in a displaceable manner at the shift lever shaft (5) and is spring-loaded into the reverse speed blocking position,

b) the actuating element (22) is adapted to be shifted on the shift lever shaft (5) for displacing the blocking member (20) from the reverse speed blocking position and is connected to the blocking member (20) through a flexible traction member (30) extending within the hollow shift lever shaft (5) and projects with an inner projection (24) through a longitudinal slot (31) of the shift lever shaft (5) into the shift lever shaft, and

c) the traction member (30) has a tenon (36) at the end adjacent to the blocking member (20) which tenon is axially displaceable within the shift lever shaft (5) and is provided with a transverse bore (37) through which a transverse pin (20″) of the blocking member (20) or a transverse pin (20‴) forming the blocking member (20) extends,
characterized in that

d) the traction member (30) is designed as a strap-like shaped part of synthetic material at the one end of which the tenon (36) is formed and the other end of which is shaped like an eyelet with an opening (35), and

e) the inner projection (24) of the actuating element (22) engages the opening (35) of the eyelet-like end (34) of the traction member (30).

2. Gear shift lever according to claim 1, characterized in that the eyelet-like end (34) of the traction member (30) is retained in a form-locking manner on the inner projection (24) of the actuating element (22).

3. Gear shift lever according to claim 2, characterized in that the eyelet-like end (34) of the traction member (30) and the inner projection (24) of the actuating element (22) are snapped into each other.

4. Gear shift lever according to claim 1, 2 or 3, characterized in that the eyelet-like end (34) of the traction member (30) has a rectangular opening (35) and the inner projection (24) of the actuating element (22) has a corresponding rectangular cross section.

5. Gear shift lever according to claim 4 in combination with claim 3, characterized in that the inner projection (24) of the actuating element (22) has a snap bead (42) on at least one lateral surface (41) for catching the eyelet-like end (34) of the traction member (30).

6. Gear shift lever according to any preceding claim, characterized in that the eyelet-like end (34) of the traction member (30) is bent laterally towards the inner projection (24) of the actuating element (22).

7. Gear shift lever according to any preceding claim, characterized in that the strap-like shaped part of synthetic material has a rectangular, particularly flat-rectangular, or circular of cross-shaped cross section between the eyelet-like end (34) and the tenon-shaped end (36).

**Revendications**

1. Levier de changement de vitesse pour véhicules automobiles muni d'un organe de blocage (20) pour empêcher l'enclenchement de la marche arrière et d'un organe d'actionnement (22) pour l'organe de blocage (20),

a) l'organe de blocage (20) étant disposé de façon mobile sur la tige (5) du levier de changement et étant sollicité élastiquement vers la position de blocage de la marche arrière,

b) l'organe d'actionnement (22) pouvant coulisser sur la tige (5) du levier de changement pour déplacer l'organe de blocage (20) hors de la position de blocage de la marche arrière et étant relié à l'organe de blocage (20) par l'intermédiaire d'un organe de traction flexible (30) qui passe dans la tige creuse (5) du levier de changement et pénétrant par une saillie intérieure (24) dans la tige (5) du levier de changement à travers une fente longitudinale (31) de celui-ci et

c) l'organe de traction (30) présentant, à l'extrémité voisine de l'organe de blocage (20), un tenon (36) pouvant coulisser axialement dans la tige (5) du levier de changement et muni d'une perforation transversale (37) à travers laquelle s'étend un tenon transversal (20″) de l'organe de blocage (20) ou un tenon transversal (20‴) formant l'organe de blocage (20), caractérisé en ce que

d) l'organe de traction (30) est conçu sous forme de pièce moulée en matière synthétique similaire à un ruban à une extrémité de laquelle est formé le tenon (36) et dont l'autre extrémité (34) est conçue de façon similaire à un œillet muni d'une ouverture (35), et

e) la saillie intérieure (24) de l'organe d'actionnement (22) s'engage dans l'ouverture (35) de l'extrémité similaire à un œillet (34) de l'organe de traction (30).

2. Levier de changement de vitesse selon la revendication 1, caractérisé en ce que l'extrémité similaire à un œillet (34) de l'organe de traction (30) est retenue sur la saillie intérieure (24) de l'organe d'actionnement (22) par engrènement de l'une dans l'autre.

3. Levier de changement de vitesse selon la revendication 2, caractérisé en ce que l'extrémité similaire à un œillet (34) de l'organe de traction (30) et la saillie intérieure (24) de l'organe d'actionnement (22) sont encliquetées entre elles.

4. Levier de changement de vitesse selon l'une des revendications 1, 2 et 3, caractérisé en ce que l'extrémité similaire à un œillet (34) de l'organe de traction (30) présente une ouverture rectangulaire (35) et la saillie intérieure (24) de l'organe d'actionnement (22), une section rectangulaire correspondante.

5. Levier de changement de vitesse selon la revendication 4 en combinaison avec la revendication 3, caractérisé en ce que la saillie intérieure (24) de l'organe d'actionnement (22) présente, sur au moins une surface latérale (41), un bourrelet d'encliquetage (42) pour l'accrochage de l'extrémité similaire à un œillet (34) de l'organe de traction (30).

6. Levier de changement de vitesse selon l'une des revendications précédentes, caractérisé en ce que l'extrémité similaire à un œillet (34) de l'organe de traction (30) est courbée latéralement en direction de la saillie intérieure (24) de l'organe d'actionnement (22).

7. Levier de changement de vitesse selon l'une des revendications précédentes, caractérisé en ce que la pièce moulée en matière synthétique similaire à un ruban présente, entre l'extrémité similaire à un œillet (34) et l'extrémité en forme de tenon (36), une section rectangulaire, en particulier rectangulaire aplatie, ou circulaire ou cruciforme.

Fig.1

Fig.2

Fig. 4

Fig. 3

Fig. 5